# EUROPEAN PATENT APPLICATION

(11) **EP 4 753 016 A1**
(43) Date of publication of application: **03.06.2026**
(21) Application number: 25218663.0
(22) Date of filing: 26.11.2025
(51) Int. Cl.: H01M 10/48, H01M 50/204, H01M 50/249, H01M 50/213

(54) **BATTERY CELL, BATTERY MODULE, BATTERY PACK AND ELECTRICAL APPARATUS**

(30) Priority: 27.11.2024 CN 202422911387 U; 31.12.2024 WO PCT/CN2024/144452
(71) Applicant: Eve Energy Co., Ltd., Huizhou, Guangdong 516006 (CN)
(72) Inventor: ZHOU, Hongquan, Huizhou, 516006 (CN)
(74) Representative: Studio Torta S.p.A.

(57) **Abstract**

This application provides a battery cell (100), a battery module (200), a battery pack and an electrical apparatus. The battery cell (100) includes a cell structure (10) and a temperature detection assembly (20). The temperature detection assembly (20) includes a holder (21) and a temperature detector (22). The cell structure (10) is fixed to the holder (21) which defines a receiving recess (2120), and the temperature detector (22) configured to collect temperature data of the cell structure (10) is at least partially received in the receiving recess (2120).

## Description

### TECHNICAL FIELD

The present application relates to the technical field of battery, and in particular to a battery cell, a battery module, a battery pack and an electrical apparatus.

### BACKGROUND

In the related technologies, new energy vehicles mostly use electricity as energy and batteries as storage media for electricity. As the core component of the battery pack, the temperature change of the battery cell assembly will affect the safety of new energy vehicles, so it is particularly important to detect the temperature of the battery cell assembly.

### SUMMARY

The existing temperature sampling structure is not firmly connected and the temperature sampling accuracy is low.

An embodiment of the present application provides a battery cell, the battery cell including:
a cell structure: and
a temperature detection assembly, including:
   a holder, having a receiving recess; and
   a temperature detector, at least partially received in the receiving recess and configured to collect temperature data of the cell unit.

An embodiment of the present application also provides a battery module, the battery module including:
a plurality of cell units, at least one of which is the battery cell;
a cell connection system (CCS) assembly, configured to connect the plurality of battery cells in series;
a collector, located at a side of the CCS assembly and connected to the temperature detector, the collector being configured to collect temperature data of the cell units.

An embodiment of the present application also provides a battery pack, the battery pack including:
a case;
at least two battery modules, spaced apart along a first direction in the case.

An embodiment of the present application also provides an electrical apparatus, including a battery pack.

An embodiment of the present application provides a battery cell, which includes a cell structure and a temperature detection assembly. The temperature detection assembly includes a holder and a temperature detector. The holder is fixed to the cell structure. The holder has a receiving recess. The temperature detector is at least partially arranged in the receiving recess. Compared with the prior art where the temperature detector is easy to fall off, the embodiment of the present application improves the reliability of the structures, avoids the falling off of the temperature detector, and ensures the sampling accuracy of temperature detection.

### BRIEF DESCRIPTION OF THE DRAWINGS

FIG. 1 is a structural schematic diagram of a battery module according to an embodiment of the present application.
FIG. 2 is a structural schematic diagram of a battery module according to an embodiment of the present application.
FIG. 3 is an enlarged view of a region A of FIG. 2.
FIG. 4 is a partial enlarged view of FIG. 3.
FIG. 5 is a top view of a battery module according to an embodiment of the present application.
FIG. 6 is a structural schematic diagram of a battery module according to an embodiment of the present application.
FIG. 7 is an enlarged view of a region C of FIG. 6.

### List of reference numerals:

100, battery cell;
10, cell structure; 11, body; 111, top side; 112, peripheral side; 12, pole;
20, temperature detection assembly; 21, holder; 211, fixing portion; 2111, installation groove; 212, receiving portion; 2120, receiving recess; 2121, base; 2122, fastener; 2123, connecting member; 2124, protrusion; 22, temperature detector;
200, battery module; 201, CCS assembly; 2011, FPC; 2012, first section; 2013, second section; 2014, CCS support; 2015, connecting bar; 2016, bending portion; 202, collector; 203, first busbar; 204, second busbar; 205, high-voltage case;
101, cell unit.

### DETAILED DESCRIPTION OF THE EMBODIMENTS

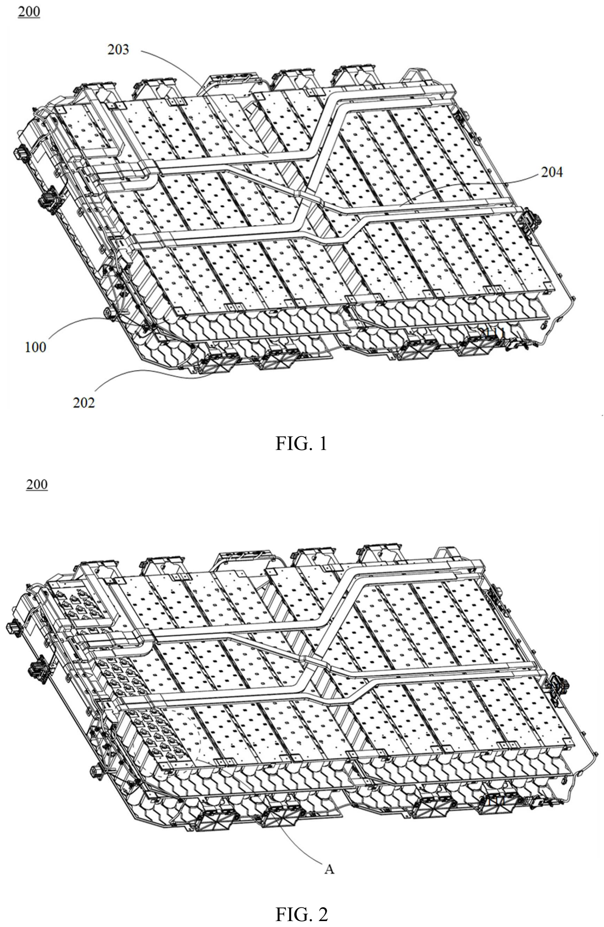

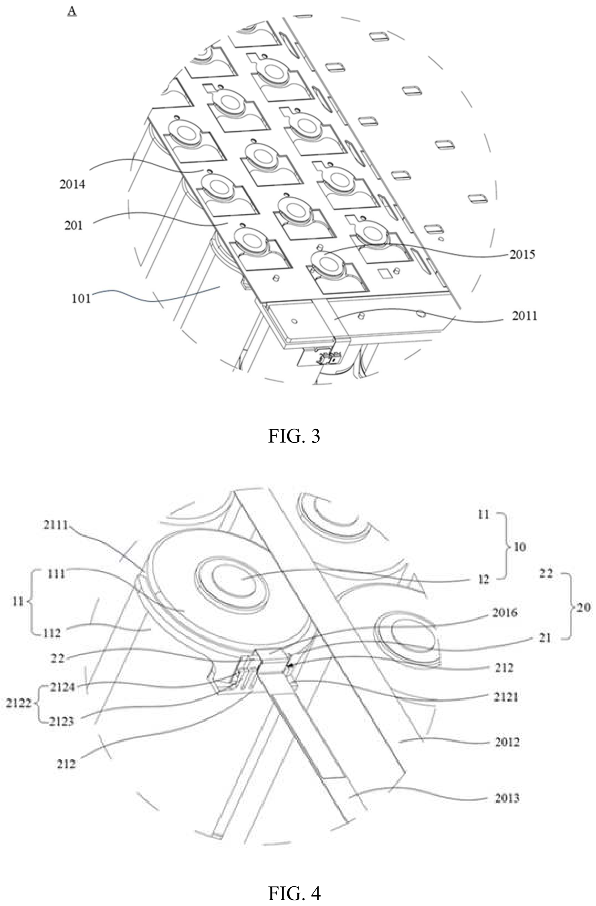

FIG. 1 is a structural schematic diagram of a battery module according to an embodiment of the present application. FIG. 2 is a structural schematic diagram of a battery module according to an embodiment of the present application. FIG. 3 is an enlarged view of a region A of FIG. 2. Please refer to FIGs. 1 to 3, an embodiment of the present application provides a battery cell 100. The battery cell is the basic unit of the battery pack, which is responsible for storing and releasing electrical energy. Please continue to refer to FIG. 4 which is a partial enlarged view of FIG. 3, showing a structure by removing the CCS support 2014 from FIG. 3. The battery cell 100 includes a cell structure 10 and a temperature detection assembly 20. The temperature detection assembly 20 includes a holder 21 and a temperature detector 22. The holder 21 is fixed to the cell structure 10. The holder 21 has a receiving recess 2120. The temperature detector 22 is at least partially disposed in the receiving recess 2120 and is configured to collect temperature data of the cell structure 10.

In the related art, the temperature detection structure is usually arranged on the sampling harness. Therefore, the temperature detector 22 is easily caused to fall off during the assembly process or the normal use of the electrical apparatus, thereby reducing the accuracy of temperature sampling. However, according to the present application, the temperature detector 22 is fixed by the battery holder 21, thereby improving the structural reliability, avoiding the temperature detector 22 from falling off, and ensuring the sampling accuracy of temperature detection.

In some examples, the temperature detector 22 is an NTC (Negative Temperature Coefficient thermistor), which is an electronic component whose resistance decreases as the temperature increases. It is widely used in for example temperature measurement and temperature compensation. It has good temperature sensitivity. When the temperature increases, its resistance value decreases. It can respond quickly to temperature changes and is suitable for real-time temperature monitoring.

In some examples, the material of the holder 21 is plastic, and the plastic may be PC, ABS, PA, etc., and its main function is to fix the cell structure 10. The plastic holder has good insulation properties, can effectively prevent current leakage and ensure safety, and the plastic holder has a certain flexibility, can effectively absorb vibration and impact, and protect the battery and its components.

In some embodiments, the cell structure 10 includes a body 11 and a pole 12. The body 11 includes a top side 111 and a peripheral side 112 surrounding the top side 111. The top side 111 is connected to the pole 12, and the top of the peripheral side 112 adjacent to the top side 111 is connected to the temperature detection assembly 20. It can be understood that during the charging and discharging process of the battery, the top side 111 is usually the area where the heat is most concentrated, so monitoring the temperature here can more accurately reflect the overall state of the battery, and it is easier to arrange related detection circuits on the top side 111, which can effectively utilize space.

In some embodiments, the holder 21 includes a fixing portion 211 and a receiving portion 212. The fixing portion 211 forms an installation groove 2111 matching in shape with the peripheral side 112 of the body 11. The body 11 is snapped into the installation groove 2111, and the receiving portion 212 is protruded on the side of the fixing portion 211 away from the body 11, and the receiving portion 212 forms the receiving recess 2120.

In some embodiments, the body 11 is a cylinder, and the fixing portion 211 has an arc-shaped structure which fits the cylinder.

It is understandable that the cylindrical battery cell 100 can generally provide a high energy density and is suitable for applications that require long battery life. However, in the related art, the contact area between the cylindrical battery cell and the temperature detector 22 is small, and the arrangement of the temperature detector 22 and the temperature collection are relatively difficult, resulting in poor temperature detection of the battery cell 100. In this embodiment, the cylindrical adaptation of the fixing portion 211 and the body 11 can ensure the fixation of the collector 202 on the cell structure 10, thereby improving the temperature collection effect.

In some examples, cell structure 10 of the battery cell 100 is cylindrical. The battery cell 100 may be a square battery cell, a square and cylindrical battery cell, etc.

In some examples, the cell structure 10 is snapped onto the fixing portion 211. When the fixing portion 211 is snapped onto the cell structure 10, the fixing portion 211 can produce a certain elastic deformation to adapt to the size of the cylindrical battery cell 100. The snap-on connection is convenient for disassembly and assembly, and occupies little space, which helps to improve the structural compactness.

In some embodiments, the receiving portion 212 includes a base 2121 and a fastener 2122. The fastener 2122 is spaced apart from the fixing portion 211. The base 2121 is connected to the fixing portion 211 and the fastener 2122 so that the fastener 2122, the base 2121 and a portion of the fixing portion 211 form the receiving recess 2120. It can be understood that if the surface of the temperature detector 22 is not protected, it is easy to cause the temperature detector 22 to be damaged, reducing the service life of the temperature detector 22. The fastener 2122, the base 2121 and the portion of the fixing portion 211 facing the fastener 2122 form the receiving recess 2120, in which the temperature detector 22 is arranged. This can improve the overall protection effect of the temperature detector 22.

In some embodiments, the fastener 2122 includes a connecting member 2123 and a protrusion 2124. The connecting member 2123 is connected to the base 2121. The protrusion 2124 protrudes from an end of the connecting member 2123 away from the base 2121, and the protrusion 2124 is snapped onto the temperature detector 22 to hold it.

In some examples, the connecting member 2123 may be elastic. When the temperature detector 22 is installed in the receiving recess 2120, the connecting member 2123 may expand appropriately and finally be snapped onto the temperature detector 22 to adapt to different shapes and sizes of the temperature detector 22.

In some examples, the receiving portion 212 includes a plurality of fasteners 2122, which are arranged in parallel. An avoidance groove is formed on the fixing portion 211 at a side thereof facing the fasteners 2122, which is connected to the receiving recess 2120. The temperature detector 22 is partially arranged in the avoidance groove, and the avoidance groove can increase the accommodating space for the temperature detector 22.

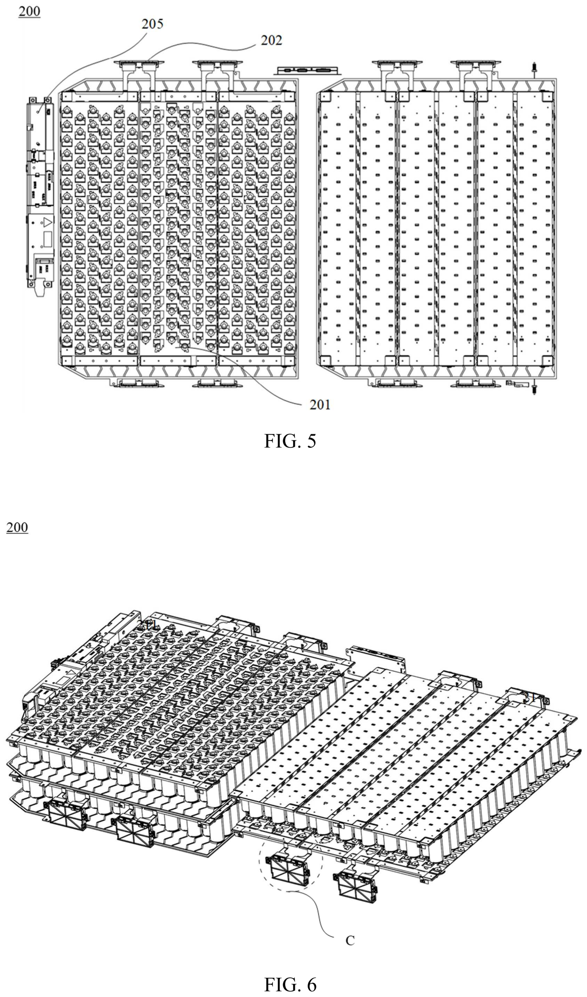

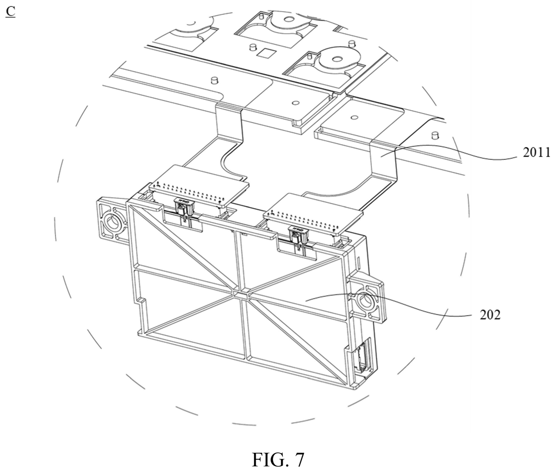

FIG. 5 is a top view of a battery module according to an embodiment of the present application. FIG. 6 is a structural schematic diagram of a battery module according to an embodiment of the present application. FIG. 7 is an enlarged view of a region C of FIG. 6. Please refer to FIGs. 5 to 7 and 1, an embodiment of the present application also provides a battery module 200 includes a plurality of cell units 101, a CCS assembly 201 and a collector 202. At least some of the cell units 101 are the battery cells 100 as described above. CCS (Cell Connection System) is a battery cell connection system, which is a key component configured to connect and manage battery cells, and it plays a role in connection, protection and monitoring in the battery pack. The CCS assembly 201 is configured to connect a plurality of battery cells 100 in series. The collector 202 is located on a side of the CCS assembly 201, and is connected to a temperature detector 22. The collector 202 is configured to collect temperature data of the battery cells 100.

In some examples, the plurality of cell units 101 are arranged in rows. The cell units 101 in adjacent rows can be connected together by connecting to a connecting bar, which can be a composite copper-aluminum bar. The first cell unit 101 in each row is the above-mentioned battery cell 100, and the rest cell units 101 in each row are other battery cells than the battery cell 100. The temperature detection assembly is configured to obtain the temperature of each row of cell units 101 by measuring the temperature of battery cell 100 in the row.

In some examples, the collector 202 may be a BIC (Battery Information Collector). Its main functions include battery temperature sampling, voltage sampling, battery balancing, and sampling line abnormality detection. By collecting battery temperature and voltage information, the battery status can be monitored and controlled.

In some embodiments, the CCS assembly 201 includes an FPC (Flexible Printed Circuit) 2011, a CCS support 2014 and a connecting bar 2015. The connecting bar 2015 is configured to connect the plurality of battery cells in series, and the CCS support 2014 is configured to fix the connecting bar 2015. Compared with a traditional rigid circuit board, FPC 2011 can be bent and folded to adapt to a complex spatial layout. FPC 2011 includes a first section 2012 and a second section 2013. The first section 2012 is connected to the temperature detector. The second section 2013 is connected to the connecting bar 2015, and is configured to collect the voltage of the battery cell 100. The first section 2012 includes a first connector, and the second section 2013 includes a second connector. The first connector and the second connector are plugged into each other on a side of the battery cell 100, so that the temperature and voltage information can be transmitted to the collector 202.

Specifically, the first section 2012 and the second section 2013 are connected to different positions of the battery module 200. The first section 2012 is installed on the side of the CCS support 2014 away from the cell units 101, and has a larger connection area with the CCS support 2014 and better structural stability. The second section 2013 is arranged at the bottom of the CCS support 2014 and lacks a corresponding supporting structure. The first section 2012 and the second section 2013 are plugged into each other, which can increase the structural strength of the first section 2012 and reduce the number of FPCs 2011 used, thereby avoiding overlapping of FPCs 2011 used for temperature detection and voltage detection.

In some embodiments, a bending portion 2016 is formed at a first end of the first section 2012. An end of the temperature detector 22 away from the receiving recess 2120 is snapped into the bending portion 2016. A second end of the first section 2012 is connected to the collector 202. The bending portion 2016 of the FPC 2011 forms a groove that matches the temperature detector 22, and an end of the temperature detector 22 away from the receiving recess 2120 is arranged in the groove to prevent the displacement of the temperature detector 22.

In some examples, a plurality of nickel sheets are provided on the FPC 2011, and each nickel sheet is configured to be electrically connected to a cell unit 101 to collect the voltage signal of each cell unit 101. The battery module 200 also includes a high-voltage case 205, a low-voltage connector, and positive and negative copper bars. The FPC collects high-voltage signals and temperature signals detected by the temperature detector 22. The low-voltage signals and temperature signals are transmitted to the low-voltage connector through the BIC and then to the BMS (Battery Management System). The high-voltage signal is transmitted to the high-voltage case 205 through the positive and negative copper bars. Part of the wiring harness in BIC is connected to the high-voltage case 205, to collect the high-voltage signals and then transmit the same to the BMS through the low-voltage connector.

In some examples, the connecting bar 2015 includes two connection pieces connected in series, and the two connection pieces are respectively connected to the cell units 101 of different rows of a same battery module 200. The first end of each of the two connection pieces is configured to connect the positive electrodes of the corresponding cell units 101, and the second end of the connection piece is configured to connect the negative electrodes of the adjacent cell units 101. Any connection piece connects the adjacent battery cells in series through its first end and second end to connect the cell units 101 of the same row in series. The two connection pieces of the same connecting bar 2015 connect the cell units 101 of different rows of the same battery module 200 in parallel. The connecting bar 2015 connects the plurality of cell units 101 of the same battery module 200 in series and parallel to complete the connection of the cell units 101 through the CCS assembly 201.

An embodiment of the present application also provides a battery pack, which includes a case and at least two battery modules 200 arranged at intervals along a first direction in the case. Specifically, the first direction may be the vertical direction. The two battery modules 200 are stacked, and are connected by a support therebetween to form a double-layer structure. A plurality of battery modules 200 with the double-layer structure may be arranged in the case. The double-layer structure can store more energy when the size of the case remains unchanged, extend the use time, and thus improve the endurance of the electrical apparatus.

In some examples, the battery module 200 is fixed in the case by foam glue, which has good thermal insulation properties and corrosion resistance, can help control the temperature of the battery, and can prevent the corrosive substances generated during the battery charging and discharging process from affecting it.

In some examples, the collector 202 may be fixed to the case by rivets. Fixing the collector 202 to the case can reduce the number of connectors and wiring harnesses to reduce weight, and can also reduce processes and save costs.

In some examples, the battery module 200 also includes a BDU (Battery Distribution Unit), which is an important component in the battery, mainly used to manage and distribute the power of the battery pack. The battery module 200 also includes two first busbars 203 and two second busbars 204. An end of one of the first busbars 203 is connected to the rear drive positive electrode on the high-voltage case 205, an end of another one of the first busbars 203 is connected to the rear drive negative electrode on the high-voltage case 205, and the other ends of the two first busbars 203 are connected to the BDU. An end of one of the second busbars 204 is connected to the fast charging positive electrode on the high-voltage case 205, an end of another one of the second busbars 204 is connected to the fast charging negative electrode on the high-voltage case 205, and the other ends of the two second busbars 204 are connected to the BDU. The BDU is directly connected to a front drive connector to reduce the busbar cost and ensure the energy input and output of the battery system in electrical apparatus such as electric vehicles.

An embodiment of the present application also provides an electrical apparatus, including the above battery pack. The electrical apparatus may be an electric vehicle, an electric tool, an electric bicycle, an energy storage system, an unmanned aerial vehicle, a mobile device, etc.

In some examples, the electrical apparatus is an electric vehicle. It is understandable that the power battery is the core of the electric vehicle and can provide driving power for the electric vehicle. Some vehicles, such as high-performance off-road vehicles, have complex driving conditions and many collisions, which can easily lead to errors in temperature sampling. The battery pack according to an embodiment of the present application can measure the temperature more accurately by providing a cell support 21 on the cell structure 10 of the battery cell 100, thereby reducing the temperature measurement obstacles caused by road problems.

## Claims

1. A battery cell (100), **characterized by** comprising:
a cell structure (10); and
a temperature detection assembly (20), comprising:
a holder (21), defining a receiving recess (2120); and
a temperature detector (22), configured to collect temperature data of the cell structure (10);
wherein the cell structure (10) is fixed to the holder (21), and the temperature detector (22) is at least partially received in the receiving recess (2120).

2. The battery cell (100) according to claim 1, **characterized in that** the cell structure (10) comprises:
a pole (12); and
a body (11), comprising:
a top side (111) connected to the pole (12); and
a peripheral side (112) surrounding the top side (111);
wherein the temperature detection assembly (20) is connected to a top of the peripheral side (112) adjacent to the top side (111).

3. The battery cell (100) according to claim 2, **characterized in that** the holder (21) comprises:
a fixing portion (211), forming an installation groove (2111) matching in shape with the peripheral side (112) of the body (11); and
a receiving portion (212), protruding from a side of the fixing portion (211) away from the body (11) to form the receiving recess (2120);
wherein the body (11) is snapped into the installation groove (2111).

4. The battery cell (100) according to claim 3, **characterized in that** the body (11) is a cylinder, and the fixing portion (211) has an arc-shaped structure matching with the cylinder.

5. The battery cell (100) according to claim 3, **characterized in that** the receiving portion (212) comprises:
a fastener (2122), spaced apart from the fixing portion (211); and
a base (2121), connected between the fixing portion (211) and the fastener (2122);
wherein the fastener (2122), the base (2121) and a part of the fixing portion (211) form the receiving recess (2120).

6. The battery cell (100) according to claim 5, **characterized in that** the fastener (2122) comprises:
a connecting member (2123), connected to the base (2121); and
a protrusion (2124), protruding from an end of the connecting member (2123) away from the base (2121) so that the protrusion (2124) is snapped onto the temperature detector (22).

7. A battery module (200), **characterized by** comprising:
a plurality of cell units (101), each of at least some of which is the battery cells (100) according to any one of claims 1 to 6;
a cell connection system (CCS) assembly (201), configured to connect the plurality of cell units (101) in series; and
a collector (202), located on a side of the CCS assembly (201) and connected to the temperature detector (22) of the battery cell (100) to collect temperature data of the plurality of cell units (101).

8. The battery module (200) according to claim 7, **characterized in that** the CCS assembly (201) comprises:
a connecting bar (2015), configured to connect the plurality of the cell units (101) in series;
a CCS support (2014), configured to fix the connecting bar (2015); and
a flexible printed circuit (FPC) (2011), comprising:
a first section (2012), connected to the temperature detector (22); and
a second section (2013), connected to the connecting bar (2015) to collect
voltages of the plurality of cell units (101);
wherein the first section (2012) comprises a first connector, and the second section (2013) comprises a second connector, wherein the first connector and the second connector are plugged into each other at a side of the plurality of the cell units (101).

9. The battery module (200) according to claim 8, **characterized in that** a bending portion (2016) is formed at a first end of the first section (2012), an end of the temperature detector (22) away from the receiving recess (2120) is snapped into the bending portion (2016), and a second end of the first section (2012) is connected to the collector (202).

10. A battery pack, **characterized by** comprising:
a case; and
at least two battery modules (200) according to any one of claims 7 to 9, arranged in the case and spaced apart along a first direction.

11. An electrical apparatus, **characterized by** comprising the battery pack according to claim 10.
